# EUROPEAN PATENT APPLICATION

(11) **EP 1 655 250 A1**
(43) Date of publication of application: **10.05.2006**
(21) Application number: 04380217.2
(22) Date of filing: 03.11.2004
(51) Int. Cl.: B65G 53/30

(54) **An apparatus and method for transporting a solid product in a carrier liquid**

(71) Applicant: HRS Spiratube S.L., 30009 Murcia (ES)
(72) Inventor: Pagan Duran, Jesus, 30008 Murcia (ES)
(74) Representative: Miller, James Lionel Woolverton

(57) **Abstract**

The invention relates to an apparatus for and method of transporting solid products in a carrier liquid, particularly transportation into a pump (50), whereby introduction of the carrier liquid into the apparatus is via a carrier liquid introduction means (20, 20a) that is separate from the means of introducing the solid product into the apparatus.

## Description

The present invention relates to an apparatus and method for transporting a solid product in a carrier liquid. It is well known, particularly in the food industry, to transport solid products such as pieces of fruit and vegetable around a process plant in a carrier liquid, through pipe lines to a cooking process. The carrier liquid is often the cooking medium such as water or other appropriate low viscosity liquid and it enables the solid product to be transported through pipe work and other system components such as a pump connected into the system.

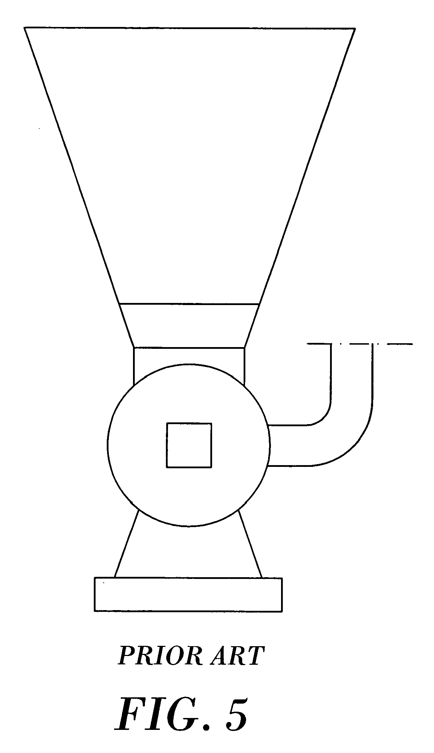

Conventional transportation systems of this type typically include a solid product hopper which outlets to a suction pump, see Figure 5. Both solid pieces and carrier liquid are fed into the top of the hopper to allow easier feed of the product/liquid into the pump. The outlet of the pump discharges to pipe work leading to a further process step. Often, the proportion of carrier liquid to solid product volume depends on the characteristic of the pump and the dimensions and geometry of the hopper and pipe work. The conventional hopper shape is designed to ensure that the product and carrier liquid are fed smoothly into the process, but the only control in the process of the proportion of carrier liquid is in the form of control of the amount of liquid loaded into the hopper. The general result is that a larger proportion of carrier liquid than solid product is drawn into the pump. The product/liquid is then dispensed into the downstream pipe work and the cooking process. A major drawback of this system is that a large amount of carrier liquid must then be heated in order to cook the solid product. A significant amount of energy is wasted in heating up the excess carrier liquid, reducing the thermal efficiency of the process and increasing the cost of the process.

It is an aim of the present invention to alleviate the problems of prior art.

According to a first aspect of the present invention, there is provided an apparatus for transporting a solid product in a carrier liquid, comprising a hopper having an inlet for the introduction of a solid product, a pump disposed beneath the hopper and a carrier liquid introduction means disposed between the hopper and the pump for controlled introduction of the carrier liquid into the apparatus for combination with the solid product prior to entry of the solid product/carrier liquid into the pump. By controlling the amount of carrier liquid at a location beneath the hopper, only a small head of carrier liquid builds up above the pump. The weight of the solid product causes it to be more closely packed in the hopper and downstream of the hopper, such that the carrier liquid fills only the voids between closely touching pieces of product.

Preferably, the introduction means for controlled introduction of the carrier liquid into the apparatus comprises a conduit disposed beneath the hopper providing communication between the hopper and the pump. The carrier liquid introduction means may comprise a hole in the wall of the conduit through which carrier liquid is supplied. A carrier liquid supply container may surround at least a portion of the conduit having the hole, for supply of carrier liquid to the conduit. An advantage of this arrangement is that as there is no great head of carrier liquid to counteract the force of the solid product acting downwards from the hopper, excess carrier liquid is urged back through the conduit and into the supply container, thus leaving a minimum amount of carrier liquid in the solid product. This improves the thermal efficiency of the process.

Preferably, the conduit includes several holes, thus allowing a larger amount of carrier liquid to enter the conduit and to be expelled from it also. Preferably, the apparatus includes a carrier liquid level controller. An advantage of having a carrier liquid level controller is that the amount of liquid building up in the conduit can be maintained at a level so as not to create a large pressure head of carrier liquid above the pump.

The cross-sectional dimension of the conduit and of an inlet to the pump may be such that the solid product freely passes therethrough. Preferably, the pump inlet comprises a smoothly rounded profile into a suction port. This profile also enables the solid product to pass through the inlet without impairing damage or greatly reducing damage thereto. The combination of the large cross-sectional area of the conduit and pump inlet and the smoothly rounded profile of the inlet means that the carrier liquid/solid product can flow easily into the inlet and it also allows the easy displacement of the carrier liquid during filling of the pump.

The pump inlet port preferably includes an actuated gate valve or an actuated ball valve. The gate valve/ball valve may be synchronised with a gate valve/ball valve at a discharge port of the pump and with a piston of the pump. This gives the advantage of restricting damage to the solid product particles passing through the inlet and discharge port.

The pump may include an aseptic steam barrier seal. This makes the pump ideal for use in the food industry.

According to a second aspect of the invention, there is provided a method of transporting a solid product in a carrier liquid as claimed in claim 12. An advantage of the method is that the carrier liquid is introduced to the suction pipe at a lower height than the solid product. Thus whilst the solid product weight creates pressure on the solid product in the suction pipe, the carrier liquid cannot build up such a pressure head to counteract the force of the solid product pressing down in the suction pipe. This excess carrier liquid (e.g. water) is more easily displaced from the pump inlet increasing the efficiency of the process.

Further features and advantages of the invention will be apparent to the skilled person from the following non-limiting description and the accompanying drawings, in which:-
Figure 1 is a front elevation of an apparatus embodying the invention;
Figure 2 is a side elevation of an apparatus embodying the invention;
Figure 3 is a second embodiment of an apparatus embodying the invention showing automatically synchronised flap valves;
Figure 4 is a schematic representation of a ball valve used in the first embodiment of the apparatus;
Figure 5 is a schematic representation of a prior art apparatus that does not embody the invention;
Figure 6a is a cross-sectional schematic representation of a shaft seal of an embodiment of the invention;
Figure 6b is a rear elevation schematic representation of a shaft seal of an embodiment of the invention;
Figure 7a is a cross-sectional schematic representation of a main pump cover of an embodiment of the invention; and
Figure 7b is a cross-sectional schematic representation of a shaft seal of an embodiment of the invention.

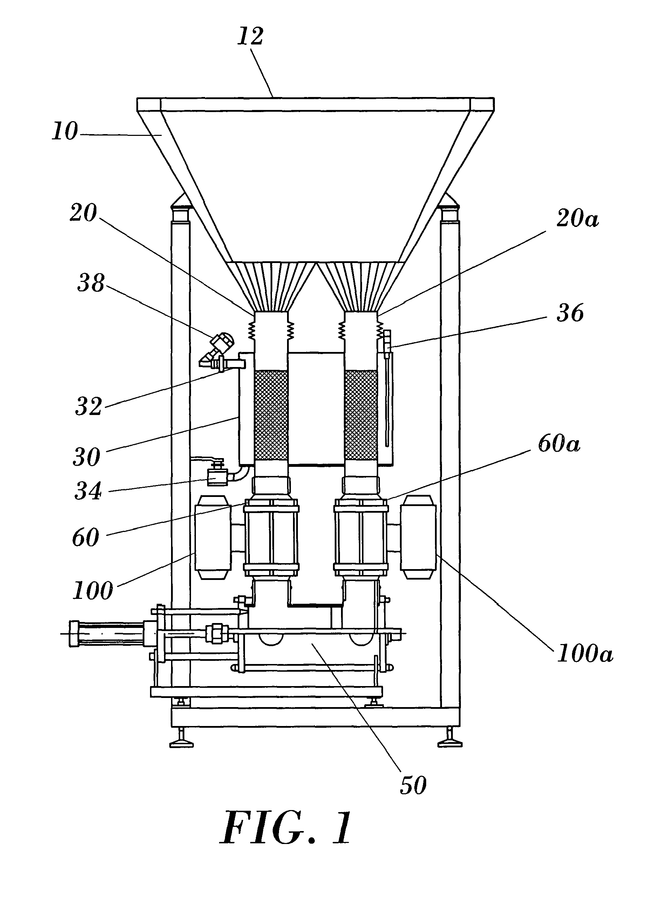

Figure 1 shows an apparatus comprising a hopper 10 , suction pipes 20, 20a , a carrier liquid supply container 30 and a hydraulic cylinder piston pump 50.

The hopper 10 includes an inlet 12 at an upper end thereof, into which solid product is fed in bulk volume. At the lower end of the hopper 10 are connected two vertically running suction pipes 20, 20a , each in communication with the hopper 10. Each suction pipe 20, 20a passes through the container 30 , the lower end thereof cooperating with the inlet of suction ports 60, 6a of pump 50. The suction pipes 20, 20a are perforated with many small holes 70 along the length thereof. The size of the holes depends on the size of the solid product to be transported, and should be smaller than the size of the solid product particles so as to avoid particles spilling out of the suction pipe.

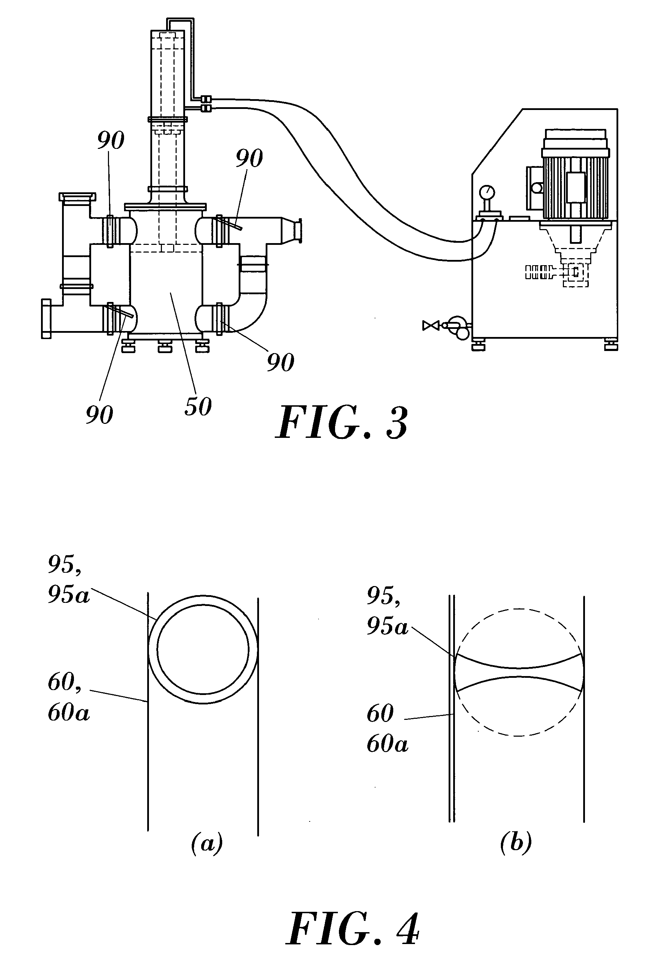

The pump 50 comprises a double acting piston (not shown), the two suction ports 60, 60a , a pump chamber (not shown) and two discharge ports 80, 80a. The inlet ports or suction ports 60, 60a each comprise a generally cylindrical component having a bore therethrough that is large enough to allow carrier liquid and solid product to pass freely therethrough. The connecting portion of each suction port 60, 60a has a smoothly rounded profile (not shown). This portion co-operates with the lower end of each suction pipe 20, 20a. This reduces the risk of damage to the solid product as it passes therethrough. The same is true of the connecting portions of the discharge port 80, 80a as they connect with the discharge pipes 85, 85a. The suction ports 60, 60a and discharge ports 80, 80a each include a suction valve for selectively opening and closing the ports. In Figure 3, the valves are shown to be simple hinging gate valves 90 that are spring operated. The valves are automatically synchronised with each other and with the piston and when open, create a large cross-sectional area through which solid product may pass, again minimising the risk of damage to the solid product.

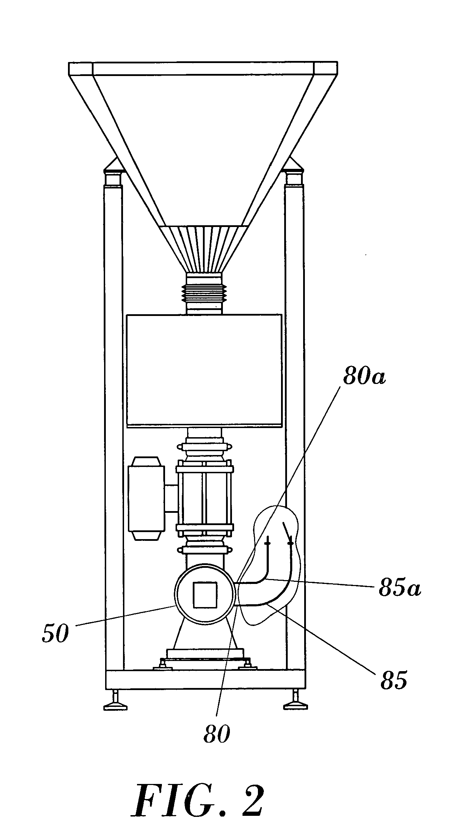

Alternatively, the inlet suction valves may be powered ball valves 95, 95a which again are synchronised with each other and with the piston to restrict damage to the solid product passing there through. The powered ball valves 95, 95a are schematically shown in Figure 4, but they may be any appropriate type of ball valve. The ball valves may be actuated using actuators 100, 100a seen in Figures 1 and 2. The actuators 100, 100a may be hydraulically, electrically or pneumatically operated to provide a 90° turn of the ball valve to open and close the valve, see Figure 4. Again, the ball of the valve is almost as large as the bore of the suction pipe 20, 20a allowing solid product to pass there through, without incurring significant damage.

The pump is fitted with an aseptic steam barrier (not shown) on the piston rod and on other gasketed and seated surfaces. This allows the pump to be used in aseptic situations. The steam barrier takes the form of a low pressure steam supply which is fed continuously into a chamber situated between two seals and thus prevents the ingress of potentially contaminating air or non sterile liquids. This feature makes the pump ideal for use in the food industry.

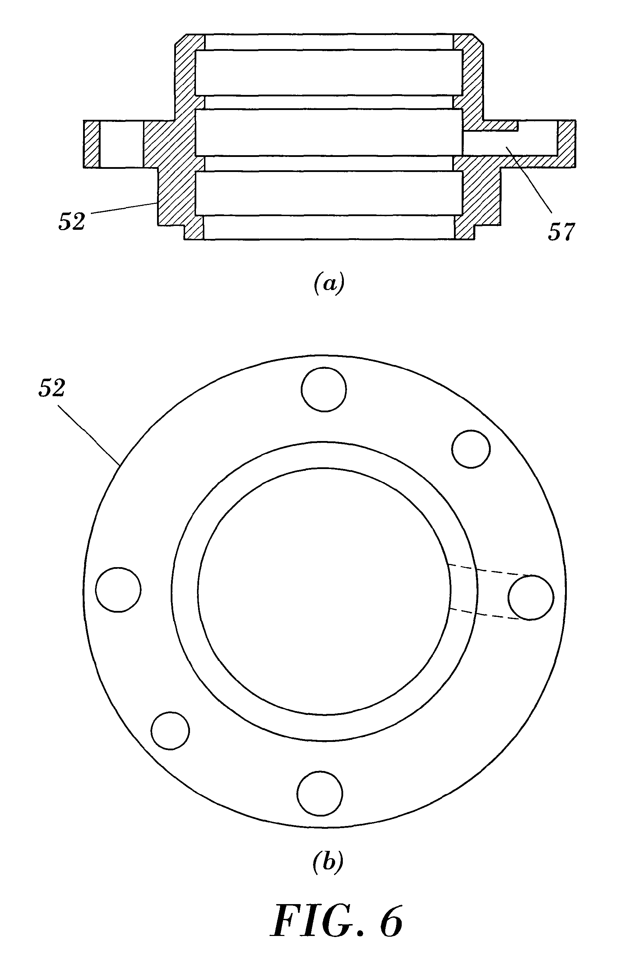

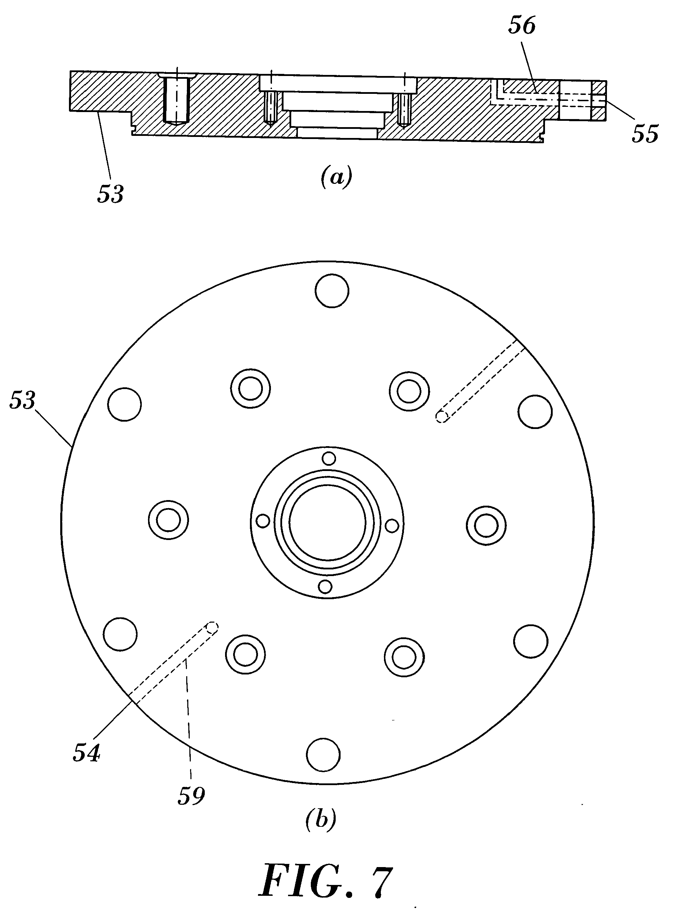

Figs. 6 and 7 show a shaft seal 52 and a main pump cover 53 respectively of a preferred embodiment of the pump aseptic sealing system. In use, the shaft seal 52 is fitted around a main shaft of the pump (not shown). The shaft seal 52 is then fitted into the pump cover 53 and steam is fed into aperture 55 of the cover. From there, the steam passes through the bore 56 and through the bore 57 in the shaft seal. The steam exits the shaft seal area through bore 59 and aperture 54 of the main cover. Steam at approximately 0.5 Bar may be used at a temperature of approximately 110 degrees Celsius.

The pump 50 itself is shown in Figures 1 to 3 as being a double acting piston pump. However, any other device suitable for moving fluids containing solid product may be used, for example an Archimedian screw.

The carrier liquid container 30 comprises a large tank that surrounds the perforated section of the suction pipes 20, 20a. The container 30 includes a carrier liquid inlet 32 towards its upper end and a carrier liquid drain 34 at its lower end. A liquid level controller 36 is provided for maintaining a constant level of carrier liquid in the suction pipes. A temperature sensor 38 is also provided for monitoring liquid temperature.

The operation of the apparatus is as follows:- a bulk volume of solid product is fed into to the hopper inlet 12 , where it falls to the bottom of the hopper and further solid product packs in on top of it. Meanwhile, the carrier liquid is introduced in the carrier liquid supply container via the carrier liquid inlet 32. The liquid gradually perforates through the holes 70 in the suction pipes 20, 20a such that the level of carrier liquid in the suction pipes become level with that in the container 30. The carrier liquid level controller 36 maintains a constant level of liquid in the pipes.

As the solid product falls from the hopper 10 into the suction pipes 20, 20a the carrier liquid fills the voids between the product pieces. The weight of the solid product in the hopper 10 above ensures that the solid product remains closely packed in the suction pipes 20, 20a , minimising the amount of excess carrier liquid that percolates between product pieces. The liquid level in the pipes rises, resulting in a small pressure head. The head is controlled by the level of liquid in the container 30 and liquid can be added at the inlet 32 or removed at the drain 34.

The pump inlet valves 90 are then opened during the suction stroke of the pump 50, and the solid product and carrier liquid is drawn into the inlet of the suction ports 60, 60a. The weight of the closely packed solid product above the suction ports is unbalanced by the small head of carrier liquid in the suction pipes, and as a result the solid product is forced into the inlet of the suction ports 60, 60a and the excess carrier liquid is displaced back upwards and through the perforation holes 70 and into the container 30. The remaining carrier liquid that enters the pump chamber with the solid product is just enough to carry the solid product through the pipe work and pump onwards, for example to a cooking process. Thus the thermal efficiency of such a cooking process is increased over that of the conventional system as no excess liquid is heated or cooled during the process.

The solid product may take various forms, such as fruit, vegetable, fruit ingredients, soup ingredients, jam and preserve ingredients, particulates and ingredients for fillings and toppings

It will be understood that the above process could be applied to a number of industries other than the food industry, such as the waste industry, or the paper industry.

## Claims

1. An apparatus for transporting a solid product in a carrier liquid, comprising a hopper having an inlet for the introduction of a solid product, a pump disposed beneath the hopper and a carrier liquid introduction means disposed between the hopper and the pump for controlled introduction of the carrier liquid into the apparatus for combination with the solid product prior to entry of the solid product/carrier liquid into the pump.

2. An apparatus as claimed in claim 1 further comprising a conduit disposed beneath the hopper providing communication between the hopper and the pump, the conduit including the introduction means for controlled introduction of the carrier liquid into the apparatus.

3. An apparatus as claimed in claim 2 in which the carrier liquid introduction means comprises a hole in the wall of the conduit through which carrier liquid is supplied.

4. An apparatus as claimed in claim 3 in which a carrier liquid supply container surrounds at least a portion of the conduit having the hole, for supply of carrier liquid to the conduit.

5. An apparatus as claimed in claim 3 or claim 4 in which the conduit comprises several holes.

6. An apparatus as claimed in claim 2 or claim 3 or claim 4 wherein the cross-sectional dimension of the conduit and of an inlet to the pump are such that the solid product freely passes therethrough.

7. An apparatus as claimed in any previous claim further comprising a carrier liquid level controller.

8. An apparatus as claimed in any previous claim in which the pump comprises a smoothly rounded inlet profile.

9. An apparatus as claimed in any previous claim in which the pump includes a gate valve.

10. An apparatus as claimed in any previous claim in which the pump includes an actuated ball valve.

11. An apparatus as claimed in any previous claim in which the pump includes an aseptic steam barrier seal.

12. A method of transporting a solid product in a carrier liquid using an apparatus comprising a hopper having an inlet for the introduction of a solid product, a pump and a conduit disposed beneath the hopper providing communication between the hopper and the pump, the conduit comprising a carrier liquid introduction means for introduction of the combination with the solid product prior to entry of the solid product/carrier liquid into the pump, the method comprising the steps of; introducing a solid product into the inlet of the hopper such that the solid product is urged toward and into the conduit, introducing carrier liquid into the carrier liquid supply container such that carrier liquid is able to flow between the container and the conduit, controlling the level of liquid in the carrier liquid supply container and operating the pump, thereby introducing solid product and carrier liquid into the pump whilst excess carrier liquid is displaced back into the carrier liquid supply container.

13. A method as claimed in claims 10 or 11 wherein the liquid level is controlled so as to provide a limited supply into the suction pipe.

14. A method as claimed in claim 10 or claim 11 or claim 12 wherein the carrier liquid remaining with the solid product in the pump is sufficient only to fill voids between pieces of solid product.

15. A method as claimed in claims 10-13 wherein the pump includes an actuated ball valve.
